# EUROPÄISCHE PATENTSCHRIFT

(11) **EP 0 618 242 B1**
(45) Veröffentlichungstag und Bekanntmachung des Hinweises auf die Patenterteilung: **15.07.1998**
(21) Anmeldenummer: 94103095.9
(22) Anmeldetag: 02.03.1994
(51) Int. Cl.: C08F 230/08, C08G 77/20, C08G 77/26, C07F 7/10

(54) **Selbsthärtende Systeme**
Self-curing systems
Systèmes auto-durcissants

(30) Priorität: 01.04.1993 DE 4310733
(43) Veröffentlichungstag der Anmeldung: 05.10.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: Gerchsheim, Herbert Wolter, Dipl.-Chem., D-97950 Grossrinderfeld (DE); Bäuerlein, Helma, D-97078 Würzburg (DE)

(56) Entgegenhaltungen:
- EP-A- 0 066 074
- EP-A- 0 130 731
- EP-A- 0 298 734
- EP-A- 0 450 624
- EP-A- 0 450 625
- EP-A- 0 451 709
- WO-A-93/07230
- US-A- 3 682 975

## Beschreibung

Die Erfindung betrifft selbsthärtende Systeme auf der Basis polymerisierbarer und hydrolytisch kondensierbarer bzw. kondensierter Silicium-Verbindungen. Die erfindungsgemäßen Systeme bestehen aus einer oder mehreren Komponenten, die Starter- (Initiator) und/oder Aktivator-Systeme enthalten, sowie gegebenenfalls übliche Additive und/oder Füllstoffe und gegebenenfalls weitere copolymerisierbare Monomere und/oder Oligomere und/oder hydrolytisch cokondensierbare Verbindungen. Ferner betrifft die Erfindung die Herstellung dieser Systeme sowie deren Verwendung. Insbesondere betrifft die vorliegende Erfindung selbsthärtende Systeme auf der Basis von Acrylaten und/oder Methacrylaten, deren Herstellung sowie deren Verwendung.

Desweiteren betrifft die Erfindung neuartige, silangebundene, tertiäre Amine der allgemeinen Formel IX oder X, die als Aktivatoren für die Selbsthärtung eingesetzt werden können.

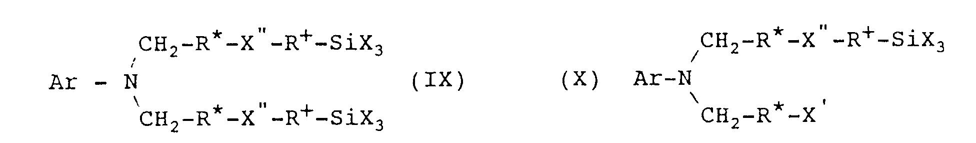

Selbsthärtende Kunststoffe sind seit langem in großer Zahl bekannt. Derartige Systeme finden für die verschiedenstens Zwecke Verwendung, z.B. als Formmassen, als Lacke für Überzüge, etc. Aufgrund dieser vielfältigen Anwendungsmöglichkeiten besteht aber auch ein ständiges Bedürfnis nach Modifizierung der bereits bekannten Systeme, zum einen um dadurch neue Anwendungsgebiete zu erschließen, und zum anderen, um deren Eigenschaften für bestimmte Verwendungszwecke noch weiter zu optimieren.

Selbsthärtende Systeme bestehen aus einer oder mehreren Komponenten und enthalten u.a. reaktive Monomere, die durch verschiedene Starter/Aktivator-Systeme polymerisieren und damit härten. Bei Zweikomponentenmaterialien z.B. enthält die eine Komponente einen Aktivator, die zweite Komponente einen Starter, und beim Zusammengeben und Vermischen der beiden Komponenten polymerisieren die reaktiven Monomere und das System härtet aus. Als reaktive Monomere werden z.B. verschiedenartig strukturierte Acrylate bzw. Methacrylate eingesetzt, als Aktivatoren z.B. aromatische Amine wie N,N-Dimethyl-p-toluidin, und als Starter z.B. Dibenzoylperoxid (DBP). Es sind auch andere Initiator/Aktivator-Systeme bekannt.

Als übliche Additive werden den selbsthärtenden Systemen Pigmente, Stabilisatoren, Weichmacher oder Schlagzähigkeitsverbesserer zugesetzt, sowie Füllstoffe der verschiedensten Art.

Ein entscheidender Nachteil der selbsthärtenden Systeme auf der Basis von Acrylaten oder Methacrylaten ist in den Methacrylat- und Acrylatmonomeren zu sehen. Vorallem niedermolekulare Acrylat- und Methacrylat-Monomere verüben neben einer starken Geruchsbelästigung oft eine akute toxische Wirkung.

Ein weiterer großer Nachteil der selbsthärtenden Systeme nach dem Stand der Technik besteht darin, daß bei der Verwendung von Aminen als Aktivatoren diese nach der Härtung im System noch vorhanden und beweglich sind, was zu großen toxikologischen Problemen führt und insbesondere eine Anwendung der selbsthärtenden Systeme im medizinischen Bereich nahezu ausschließt.

Aufgrund der manigfaltigen Einsatzmöglichkeiten von selbsthärtenden Systemen, verbunden mit den verschiedenartigsten Anforderungen an diese ist immer Raum für neue Entwicklungen.

Aufgabe der vorliegenden Erfindung ist es deshalb, weitere selbsthärtende Systeme zur Verfügung zu stellen. Diese Systeme sollen universell einsetzbar und leicht zu handhaben sein, sie sollen mit bekannten Starter/Aktivator-Systemen härtbar und flexibel in der Verarbeitungs- bzw. Applikationszeit sein, d.h. einstellbare Härtungszeiten zwischen einer und ca. 30 Minuten aufweisen. So sollen z.B. selbsthärtende Systeme für Verklebungen schnell und solche für die Herstellung von Formkörpern langsam härten. Ferner sollen diese Systeme mit Additiven und Füllstoffen versehen werden können und sie sollen mit thermisch und/oder UV-härtbaren Systemen bzw. Komponenten in weiten Bereichen mischbar sein. Außerdem sollen diese Systeme in ein organisch-anorganisches Netzwerk eingebaut werden können, und die Bestandteile des Systems, insbesondere die reaktiven Monomere, sollen toxikologisch unbedenklich sein.

Eine weitere Aufgabe der vorliegenden Erfindung ist die Bereitstellung solcher selbsthärtenden Systeme, die mit toxikologisch unbedenklichen Aktivatoren härtbar sind, so daß ein Einsatz dieser Systeme im medizinischen Bereich möglich wird.

Gelöst wird diese Aufgabe durch selbsthärtende Systeme auf der Basis von polymerisierbaren und hydrolytisch kondensierbaren und/oder kondensierten Verbindungen des Siliciums. Die erfindungsgemäßen Systeme bestehen aus einer oder mehreren Komponenten, die Starter und/oder Aktivator-Systeme enthalten, sowie gegebenenfalls übliche Additive und/oder Füllstoffe und gegebenenfalls weitere copolymerisierbare Monomere und/oder Oligomere und/oder weitere hydrolytisch kondensierbare und/oder kondensierte Verbindungen des Siliciums und gegebenenfalls anderer Elemente aus der Gruppe Al, Ti, Zr, B, P, Sn, Pb, der Übergangsmetalle, der Lanthaniden, der Actiniden. Mindestens eine Komponente der erfindungsgemäßen Systeme enthält eine oder mehrere Silicium-Verbindung der Formel I und/oder von diesen abgeleitete Vorkondensate und/oder Kondensate,

{XₐR_{b}Si[R'(A)_{c}]_{(4-a-b)}}ₓ B (I)

in der die Reste A, B, R, R' und X gleich oder verschieden sind und folgende Bedeutung haben:
- A =: O, S, PR", POR", NHC(O)O oder NHC(O)NR", mit R" = Wasserstoff, Alkyl oder Aryl,
- B =: geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoff-Atomen ableitet,
mit R"= Wasserstoff, Alkyl oder Aryl,
- R =: Alkyl, Alkenyl, Aryl, Alkylaryl oder Arylalkyl,
- R' =: Alkylen, Arylen oder Alkylenarylen,
- X =: Wasserstoff, Halogen, Hydroxy, Alkoxy, Acyloxy, Alkylcarbonyl, Alkoxycarbonyl oder NR"₂, mit R" = Wasserstoff, Alkyl oder Aryl,
- a =: 1, 2 oder 3,
- b =: 0, 1 oder 2,
- c =: 0 oder 1,
- x =: eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht.

Überraschenderweise wurde festgestellt, daß sich die Silane der Formel I ganz hervorragend zum Einsatz als reaktive Monomere in selbsthärtenden Systemen eignen. Die C=C-Doppelbindungen der silangebundenen Reste B ermöglichen nach Zusatz geeigneter Aktivator/Starter-Systeme über eine organische Polymerisation eine schnelle Härtung, wobei die Reaktionsgeschwindigkeit, d.h. die Härtungszeit, über die Starter/Aktivator-Konzentration sowie über deren Verhältnis gesteuert werden kann. Desweiteren kann die Härtungszeit über die Anzahl und die Reaktivität der vernetzbaren Komponenten bzw. der vernetzbaren Gruppen, z.B. der Acrylat-Gruppen gesteuert werden. Somit ist es möglich, die erfindungsgemäßen Systeme sowohl für die Herstellung von Formkörpern einzusetzen, wo längere Härtungszeiten erwünscht sind, als auch für Verklebungen, wo eine schnelle Härtung gefordert wird. Damit bergen die erfindungsgemäßen Systeme ein reichhaltiges Variationspotential bzgl. ihrer Anwendung.

Ein weiterer Vorteil der erfindungsgemäßen Systeme besteht darin, daß die Silylalkoxy-Gruppen der Silane der Formel I die Möglichkeit bieten, nach den Prinzipien des Sol-Gel-Verfahrens ein anorganisches Netzwerk aufzubauen, wobei in dieses Netzwerk weitere anorganisch vernetzende Komponenten eingebaut werden können, das damit in weiten Bereichen variierbar ist und einfach und universell den Erfordernissen des jeweiligen Anwendungsfalles angepaßt werden kann.

Desweiteren besteht ein Vorteil der erfindungsgemäßen Systeme darin, daß über die Silylalkoxy-Gruppen sowie über die C=C-Doppelbindungen der Silane der Formel I ein organisch-anorganisches Netzwerk aufgebaut wird, das ebenfalls in weiten Bereichen variierbar ist und ebenfalls einfach und universell den Erfordernissen des jeweiligen Anwendungsfalles angepaßt werden kann. So können z.B. weitere copolymerisierbare, selbsthärtende sowie thermisch und/oder UV-härtbare Monomere den erfindungsgemäßen Systemen zugesetzt werden, um damit deren chemische und physikalische Eigenschaften den Anforderungen des jeweiligen Anwendungsfalles anzupassen.

Mit den erfindungsgemäßen selbsthärtenden Systemen werden Materialien zur Verfügung gestellt, die die Herstellung von anorganisch-organischen Verbundpolymeren mit den unterschiedlichsten Eigenschaften ermöglichen. Diese unterschiedlichen Eigenschaften sind z.B. über die strukturellen Verhältnisse innerhalb der eingesetzten Silane der Formel I einstellbar, sowie durch die strukturellen Verhältnisse der copolymerisierbaren Monomere bzw. der weiteren cohydrolysierbaren Komponenten.

Die erfindungsgemäßen, selbsthärtenden Systeme können entweder als solche oder in Form von Lösungen in der Verbindungstechnik (z.B. von optisch-elektronischen Bauteilen) als Kleber bzw. Haftvermittler für die verschiedensten Substrate eingesetzt werden, ferner zur Oberflächenversiegelung konventioneller Komposite, als Klebstoffe, Komposite, Bulkmaterialien, als Verguß-, Dichtungs- und Beschichtungsmassen oder in Formgebungsverfahren bzw. in der Abformtechnik (z.B. in der Replikatechnik). Desweiteren können die erfindungsgemäßen Systeme zur Herstellung von Fasern, Folien oder Füllstoffen eingesetzt werden. Ferner wird beim Einsatz von reaktiven Acrylat- bzw. Methacrylat-Gruppen eine schnelle und vollständige Härtung ermöglicht, wobei die Härtungszeiten über deren Anzahl und deren Reaktivität gesteuert werden kann. Desweiteren ist eine Kombination von Selbsthärtung mit z.B. photoinduzierter bzw. thermischer Härtung möglich.

Ein weiterer großer Vorteil der erfindungsgemäßen, selbsthärtenden Systeme gegenüber dem Stand der Technik besteht darin, daß polymerisierbare, toxische Monomeren, z.B. toxische Acrylate oder Methacrylate, fest an die Silane der Formel I gebunden und dadurch fest in das anorganisch-organische Netzwerk eingebettet sind, sodaß selbst im Falle einer unvollständigen Polymerisation nach der Härtung keine freien Monomere vorliegen können. Bei den selbsthärtenden Systemen nach dem Stand der Technik auf der Basis von Acrylaten bzw. Methacrylaten besteht indes immer die Gefahr, daß nach der Härtung aufgrund einer unvollständigen Polymerisation noch freie Monomere vorliegen, die zu erheblichen toxischen Problemen führen können.

Deshalb besteht die Möglichkeit, die erfindungsgemäßen Systeme auch im medizinischen Bereich einzusetzen. Eine mögliche Anwendung ist z.B. die Verwendung als Introkularlinsen-Füllmaterial bei der Bekämpfung von Katarakt und anderen Augenkrankheiten. Bezüglich näherer Einzelheiten hierzu wird auf die DE 3927667 A1 verwiesen.

Die Silane der Formel I sind über die Reste B polymerisierbar und über die Reste X hydrolysierbar. Über die hydrolysierbaren Gruppen kann ein anorganisches Netzwerk mit Si-O-Si-Einheiten aufgebaut werden, während die im Rest B enthaltenen Doppelbindungen unter Aufbau eines organischen Netzwerkes polymerisieren.

Die Alkyl-Reste sind z.B. geradkettige, verzweigte oder cyclische Reste mit 1 bis 20, insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl.

Bevorzugte Aryl-Reste sind Phenyl, Biphenyl und Naphthyl. Die Alkoxy-, Acyloxy-, Alkylamino-, Dialkylamino-, Alkylcarbonyl-, Alkoxycarbonyl-, Arylaklyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. b=2 können die Reste X und R jeweils die selbe oder eine unterschiedliche Bedeutung haben.

In bevorzugten Ausführungsformen der erfindungsgemäßen, selbsthärtenden Systeme sind die Reste X, R, R', A, a, b, c und x in der allgemeinen Formel I wie folgt definiert:
- X :: (C₁-C₄)-Alkoxy, insbesondere Methoxy und Ethoxy, oder Halogen, insbesondere Chlor;
- R :: (C₁-C₄)-Alkyl, insbesondere Methyl und Ethyl;
- R' :: (C₁-C₄)-Alkylen, insbesondere Methylen und Propylen;
- A :: O, S oder NHC(O)O, insbesondere S oder NHC(O)O;
- a :: 1, 2 oder 3;
- c :: 0 oder 1, vorzugsweise 1,
- 4-a-b :: 0 für c = 0 und 1 für c = 1;
- x :: 1 oder 2.

Bei besonders bevorzugten Ausführungsformen der erfindungsgemäßen Systeme ist in der allgemeinen Formel I die Struktureinheit mit dem Index x ausgewählt aus Triethoxysilyl, Methyldiethoxysilyl, Methyldichlorsilyl, 3-Methyldimethoxysilyl-propylthio, 3-Triethoxysilyl-propylthio, Ethoxydimethylsilyl-methylthio, Methyldiethoxysilyl-methlythio oder 3-Triethoxysilylpropylurethan.

Der Rest B in der allgemeinen Formel I leitet sich ab von einer substituierten oder unsubstituierten Verbindung B' mit mindestens einer bzw. mit mindestens zwei C=C- Doppelbindungen, z.B. mit Vinyl-, Allyl-, Acryl- und/oder Methacryl-Gruppen, und mit 5 bis 50, vorzugsweise mit 6 bis 30 Kohlenstoff-Atomen. Vorzugsweise leitet sich B ab von einer substituierten oder unsubstituierten Verbindung B' mit zwei oder mehreren Acrylat- und/oder Methacrylat-Gruppen. Derartige Verbindungen werden im folgenden als (Meth)Acrylate bezeichnet.

Falls die Verbindung B' substituiert ist, können die Substituenten unter den oben genannten Substituenten gewählt sein.

Bei weiteren bevorzugten Ausführungsformen der erfindungsgemäßen Systeme werden Silane der allgemeinen Formel I eingesetzt, in der sich B von Acrylsäureestern von Trimethylolpropan, Pentaerythrit, Dipentaerythrit, C₂-C₄-Alkandiolen, z.B. von Glycerin (z.B. Glycerindimethacrylat), Polyethylenglycolen, Polypropylenglycolen oder von gegebenenfalls substituiertem und/oder alkoxyliertem Bisphenol A ableitet.

Konkrete Beispiele für Silane der allgemeinen Formel I sowie deren Herstellung sind der EP 0451709 A2 zu entnehmen.

Neben den Silanen der allgemeinen Formel I können noch weitere hydrolytisch kondensierbare Verbindungen des Siliciums oder anderer Elemente aus der Gruppe Al, Ti, Zr, B, P, Sn, Pb, der Übergangsmetalle, der Lanthaniden und der Actiniden entweder als solche und/oder bereits in vorkondensierter und/oder kondensierter Form zur Herstellung der erfindungsgemäßen Systeme herangezogen werden.

Bevorzugt ist es, wenn mindestens 50 Mol-%, insbesondere mindestens 80 Mol-% und speziell mindestens 90 Mol-%, auf Basis monomerer Verbindungen, der zur Herstellung der erfindungsgemäßen Systeme herangezogenen Ausgangsmaterialien Silicium-Verbindungen sind. Ebenso ist es bevorzugt, wenn den erfindungsgemäßen Systemen mindestens 10 Mol-%, z.B. 25 bis 100 Mol-%, insbesondere 50 bis 100 Mol-% und speziell 75 bis 100 Mol-%, jeweils auf Basis monomerer Verbindungen, an einem oder mehreren der Silane der allgemeinen Formel I zugrunde liegen.

Unter den von Silanen der allgemeinen Formel I verschiedenen hydrolytisch kondensierbaren und/oder kondensierten Silicium-Verbindungen, die gegebenenfalls eingesetzt werden können, sind solche der allgemeinen Formel II oder von diesen abgeleitete (Vor)Kondensate bevorzugt,

Rₓ(R²Z)_{y}SiX_{4-(x+y)} (II)

in der die Reste R, R² und Z gleich oder verschieden sind und folgende Bedeutung haben:
- R =: Alkyl, Alkenyl, Aryl, Alkylaryl oder Arylalkyl,
- R² =: Alkylen oder Alkenylen, wobei diese Reste durch Sauerstoff- oder Schwefelatome oder -NH-Gruppen unterbrochen sein können,
- X =: Wasserstoff, Halogen, Hydroxy, Alkoxy, Acyloxy, Alkylcarbonyl, Alkoxycarbonyl oder NR"₂,
mit R" = Wasserstoff, Alkyl oder Aryl,
- Z =: Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
- x =: 0, 1, 2, oder 3,
- y =: 0, 1, 2, oder 3, mit x+y = 1,2 oder 3.

Silane der allgemeinen Formel II sind entweder im Handel erhältlich oder lassen sich nach bekannten Methoden herstellen; vgl.W.Noll, "Chemie und Technologie der Silicone", Verlag Chemie GmbH, Weinheim/ Bergstraße (1968). Im übrigen wird auf die deutsche Patentanmeldung P 40 11 044.3 verwiesen und auf die DE 34 07 087 C2.

Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere AlkylReste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Isocyanato, Nitro, Epoxy, SO₃H und PO₄H₂.

Unter den Halogenen sind Fluor, Chlor und Brom bevorzugt.

Spezielle Beispiele für hydrolytisch kondensierbare Silane der allgemeinen Formel II sind:
CH₃-Si-Cl₃, CH₃-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, (CH₃)₂-Si-Cl₂, CH₂=CH-Si-(OOCCH₃)₃, (CH₃)₂-Si-(OC₂H₅)₂, (C₂H₅)₃-Si-Cl, (C₂H₅)₂-Si-(OC₂H₅)₂, (CH₃)₂(CH₂=CH)-Si-Cl₂, (CH₃)₃-Si-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH, (CH₃O)₃-Si-C₃H₆-NH-C₂H₄-NH₂, (CH₃O)₃-Si-C₃H₆-Cl, (CH₃O)₃-Si-C₃H₆-O-C(O)-C(CH₃)=CH₂, (CH₃)₂(CH₂=CH-CH₂)-Si-Cl, (C₂H₅O)₃-Si-C₃H₆-NH₂, (C₂H₅O)₃-Si-C₃H₆-CN,

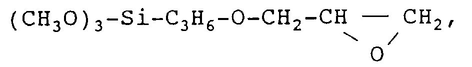

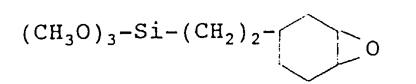

Desweiteren sind unter den von Silanen der allgemeinen Formel I verschiedenen hydrolytisch kondensierbaren Silicium-Verbindungen, die gegebenenfalls eingesetzt werden können, solche der allgemeinen Formel III ebenfalls bevorzugt,

Yₙ Si Xₘ R₄₋₍ₙ₊ₘ₎ (III)

in der die Reste X, Y und R gleich oder verschieden sind und folgende Bedeutung haben:
- R =: Alkyl, Alkenyl, Aryl, Alkylaryl oder Arylalkyl,
- X =: Wasserstoff, Halogen, Hydroxy, Alkoxy, Acyloxy, Alkylcarbonyl, Alkoxycarbonyl oder NR"₂,
mit R" = Wasserstoff, Alkyl oder Aryl,
- Y =: ein Substituent, der einen substituierten oder unsubstituierten 1,4,6-Trioxaspiro-[4,4]-nonan-Rest enthält,
- n =: 1, 2 oder 3,
- m =: 1, 2 oder 3, mit n+m ≤ 4.

Die Silane der allgemeinen Formel III sind ebenso wie die Silane der allgemeinen Formel I hydrolysierbar und polymerisierbar und können wie die Silane der Formel I in ein organisch-anorganisches Netzwerk eingebaut werden. Ferner sind Silane der allgemeinen Formel III stabile Verbindungen, die im basischen Milieu hydrolysier- und kondensierbar sind, ohne daß der Spirokomplex vorzeitig geöffnet wird. Ferner bieten sie den großen Vorteil, daß durch ihren Zusatz das Schrumpfverhalten der erfindungsgemäßen Systeme während der Härtung, d.h. während der Polymerisation so beeinflußt wird, daß keine oder nur eine geringe Schrumpfung auftritt und sogar eine Expansion möglich ist.

Die Reste X und R der allgemeinen Formel III sind wie in der allgemeinen Formel II definiert. Konkrete Beispiele für Silane der allgemeinen Formel III sowie deren Herstellung sind der DE 4125201 C1 zu entnehmen.

Unter den gegebenenfalls zur Herstellung der erfindungsgemäßen Systeme verwendeten hydrolysierbaren und/oder hydrolysierten Aluminium-Verbindungen sind diejenigen besonders bevorzugt, die die allgemeine Formel IV aufweisen oder sich durch Kondensation von dieser ableiten,

AIR°₃ (IV)

in der die Reste R°, die gleich oder verschieden sind und ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Silicium-Verbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminium-Verbindungen sind die Aluminiumalkoxide und -halogenide. In diesem Zusammenhang können als konkrete Beispiele Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃ und AlCl(OH)₂ genannt werden. Bei Raumtemperatur flüssige Verbindungen, wie z.B. Aluminium-sek-butylat und Aluminium-isopropylat, werden besonders bevorzugt.

Geeignete hydrolysierbare Titan- und Zirkon-Verbindungen, die erfindungsgemäß eingesetzt werden können, sind solche der allgemeinen Formel V,

M Xₖ R₁ (V)

in der M Titan oder Zirkon bedeutet, die Reste R und X gleich oder verschieden und wie im Falle der allgemeinen Formel I definiert sind. Dies gilt auch für die bevorzugten Bedeutungen. k stellt eine ganze Zahl von 1 bis 4 dar, insbesondere 2 bis 4, und 1 steht für 0, 1, 2 oder 3, vorzugsweise für 0, 1 oder 2. Besonders bevorzugt handelt es sich bei den Verbindungen der Formel V um solche, in denen k gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure.

Konkrete Beispiele für einsetzbare Zr- und Ti-Verbindungen sind TiCl₄, Ti(OC₂H₅)₄, Ti(OC₃H₇)₄, Ti(O-i-C₃H₇)₄, Ti(OC₄H₉)₄, Ti(2-ethylhexoxy)₄, ZrCl₄, Zr(OC₂H₅)₄, Zr(OC₃H₇)₄, Zr(O-i-C₃H₇)₄, Zr(OC₄H₉)₄, Zr(2-ethylhexoxy)₄ und ZrOCl₂.

Weitere hydrolysierbare Verbindungen, die zur Herstellung der erfindungsgemäßen Systeme eingesetzt werden können, sind z.B. Bortrihalogenide und Borsäureester, wie z.B. BCl₃, B(OCH₃)₃ und B(OC₂H₅)₃, Zinntetrahalogenide und Zinntetraalkoxide, wie z.B. SnCl₄ und Sn(OCH₃)₄, und Vanadyl-Verbindungen, wie z.B. VOCl₃ und VO(OCH₃)₃.

Durch den erfindungsgemäßen Einsatz von von Silicium-Verbindungen verschiedenen hydrolysierbaren und/oder hydrolysierten Verbindungen ist es möglich, Hetero-Atome in das anorganische Netzwerk einzubauen und damit die Egenschaften des erfindungsgemäßen Systems den Anforderungen des jeweiligen Anwendungsfalles anzupassen, z.B. bzgl. der Röntgenopazität, der thermischen Ausdehnung etc..

Desweiteren können eine oder mehrere Komponenten der erfindungsgemäßen, selbsthärtenden Systeme thermisch und/oder strahlungsinduziert copolymerisierbare Monomere enthalten. Besonders bevorzugt sind Spiroorthoester, Spiroorthocarbonate, bicyclische Spiroorthoester, Mono- oder Oligoepoxide, Epoxysilane oder Vinylether.

Ferner ist es möglich, einer oder mehreren Komponenten der erfindungsgemäßen Systeme selbsthärtend copolymerisierbare Monomere zuzusetzen.

Die Silane der allgemeinen Formel I werden entweder alleine oder zusammen mit anderen hydrolytisch kondensierbaren und gegebenenfalls polymerisierbaren Komponenten durch hydrolytische Kondensation zu den erfindungsgemäßen, selbsthärtenden Systemen verarbeitet, deren endgültige Härtung dann durch Polymerisation der polymerisierbaren Gruppen erfolgt, wobei im Fall der Silane der allgemeinen Formel I diese Polymerisation über eine Verknüpfung der C=C-Doppelbindungen der Reste B verläuft und im Falle der Spiro-Silane der allgemeinen Formel III über eine Ringöffnung der 1.4.6-Trioxaspiro-[4.4]-nonan-Gruppen.

Die Silane der allgemeinen Formeln I, II (die auch polymerisierbare Gruppen enthalten können, wie z.B. C=C- oder Epoxy-Gruppen) und III sowie z.B. Titan-, Zirkon- und Aluminiumverbindungen der allgemeinen Formeln IV und V enthalten hydrolysierbare Gruppen X bzw. R°, z.B. Alkoxy-Gruppen, durch die bei der hydrolytischen Kondensation ein anorganisches Netzwerk aufgebaut wird, während die im Rest B enthaltenen C=C-Doppelbindungen bzw. die im Rest Y enthaltenen Spiro-Gruppen bei der Polymerisation ein organisches Netzwerk bilden. Das anorganische Netzwerk kann durch den Zusatz weiterer hydrolytisch kondensierbarer und/oder (vor)kondensierter Verbindungen zusätzlich modifiziert werden und das organische Netzwerk durch Zugabe weiterer copolymersierbarer Verbindungen. Die gehärteten erfindungsgemäßen Systeme bilden somit eine anorganisch-organische Matrix, in die bei Bedarf weitere Komponenten, wie z.B. Füllstoffe oder Pigmente, eingebaut sein können.

Zum Aufbau des anorganischen Netzwerkes bzw. zur Herstellung der erfindungsgemäßen, selbsthärtenden Systeme werden die Silane der allgemeinen Formel I, gegebenenfalls unter Zusatz der Silane der Formel II und/oder III sowie anderer cokondensierbarer Komponenten und gegebenenfalls in Anwesenheit eines Katalysators und/oder eines Lösungsmittels durch Einwirken von Wasser oder Feuchtigkeit hydrolysiert und polykondensiert. Diese Polykondensation erfolgt vorzugsweise nach dem Sol-Gel-Verfahren, wie es z.B. in den Offenlegungsschriften DE 2758414, 2758415, 3011761, 3826715 und 3835968 beschrieben ist, und sie erfolgt bei Anwesenheit von Spiroverbindungen (Silane der allgemeinen Formel III, copolymerisierbare Spiroorthoester, Spiroorthocarbonate, bicyclische Spiroorthoester oder Methacryloyl-Spiroorthoester) vorzugsweise im basischen Milieu, anderenfalls kann sie auch im sauren Milieu durchgeführt werden.

Die Herstellung der erfindungsgemäßen, selbsthärtenden Systeme kann in der auf dem Gebiet der Poly(hetero)kondensate üblichen Art und Weise erfolgen. Werden praktisch ausschließlich Silicium-Verbindungen eingesetzt, kann die hydrolytische Kondensation in den meisten Fällen dadurch erfolgen, daß man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen des Al, Ti oder Zr, die auch in komplexierter Form vorliegen können, empfielt sich in der Regel eine stufenweise Zugabe des Wassers. Unabhängig von der Reaktivität der anwesenden Verbindungen erfolgt die Hydrolyse in der Regel bei Temperaturen zwischen - 20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern es mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylether, Dimethylformamid, Amine, insbesondere Triethylamin, und deren Gemische in Frage.

Werden zur Herstellung der erfindungsgemäßen, selbsthärtenden Systeme Spiro-Silane der allgemeinen Formel III eingesetzt, so wird die Hydrolyse bevorzugt in einem bzgl. dieser Silane basischen Milieu durchgeführt. Dies wird entweder durch ein basisches Lösungsmittel, wie z.B. durch Triethylamin, erzeugt, oder durch Zugabe von basischen Hydrolyse- und Kondensationskatalysatoren, wie z.B. von NH₃, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Polykondensat ist lagerstabil und kann nach Zusatz von Starter- bzw. Aktivator-Systemen entweder als solches oder nach teilweiser oder nahezu vollständiger Entfernung des verwendeten Lösungsmittels bzw. des während der Reaktion gebildeten Lösungsmittels als selbsthärtendes System oder als Komponente in selbsthärtenden Systemen eingesetzt werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur (bis maximal 80 °C) so weit eingedickt werden, daß sie noch problemlos mit einem anderen Lösungsmittel aufgenommen werden kann.

Zum Aufbau des organischen Netzwerkes bzw. zur Härtung der erfindungsgemäßen Systeme wird das erfindungsgemäße Polykondensat nach Zusatz von Starter- und/oder Aktivator-Systemen und gegebenenfalls nach Zusatz anderer copolymerisierbarer Verbindungen sowie von Füllstoffen und anderen Additiven polymerisiert, wobei neben der Selbsthärtung bei Zusatz entsprechender Monomere zusätzlich auch eine thermische und/oder eine strahlungsinduzierte Härtung durchgeführt werden kann.

Die endgültige Härtung der erfindungsgemäßen Systeme erfolgt bei Einkomponentensystemen entweder durch Zugabe eines Starter/Aktivator-Systems unmittelbar vor der Härtung, oder durch unmittelbare Zugabe eines Starters zu einem System, das bereits einen Aktivator enthält, bzw. durch unmittelbare Zugabe eines Aktivators zu einem einen Starter enthaltenden System. Bei Mehrkomponenten-Systemen erfolgt die endgültige Härtung durch Vermischen der einzelnen Komponenten, die Starter- bzw. Aktivator-Systeme enthalten. Dabei werden im Zuge einer radikalischen Polymerisation die C=C-Doppelbindungen der Silane gemäß der Formel I verknüpft und bei Anwesenheit von Silanen der allgemeinen Formel III im Zuge einer kationischen Polymerisation die Ringe der Spiro-Gruppen geöffnet.

Als Starter/Aktivator-Systeme für die Selbsthärtung können die für solche Systeme üblichen eingesetzt werden, wie z.B. aromatische Amine (z.B. N, N-Bis-( 2-hydroxy-ethyl)-p-toluidin) als Aktivatoren und als Starter z.B. Dibenzoylperoxid. Weitere konkrete Beispiele für Aktivator/Starter-Systeme sind Dimethyl-p-toluidin mit Lauroylperoxid, Dibenzoylperoxid oder anderen Peroxiden, ferner Anilin/n-Butyraldehyd mit t-Butylhydroperoxid, Saccharin oder Cumolhydroperoxid, Triethanolamin mit K₂S₂O₈ oder (NH₄)₂S₂O₈, Ascorbinsäure mit H₂O₂, und Barbitursäure-Derivate mit Dibenzoylperoxid und Metall-Salzen als Co-Katalysator. Dabei kann über die Konzentration der Starter/Aktivator-Systeme und über deren Konzetrationsverhältnis die Härtungszeit der erfindungsgemäßen Systeme entsprechend den Anforderungen des jeweiligen Anwendungsfalles eingestellt werden.

Das Bereitstellen solcher selbsthärtender Systeme, die mit toxikologisch unbedenklichen Aktivatoren härtbar sind, wird durch die Kombination der erfindungsgemäßen Systeme mit silangebundenen, tertiären Aminen der allgemeinen Formel IX oder X als Aktivatoren gelöst.

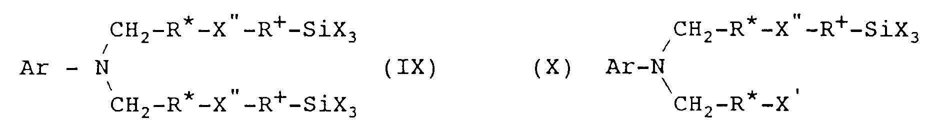

Die Reste haben folgende Bedeutung:
- Ar =: Aryl, bevorzugt Phenyl, Naphthyl oder Biphenyl,
- R* =: Alkylen mit 1 bis 10, bevorzugt mit 1 bis 4 C-Atomen,
- R⁺ =: Alkylen mit 0 bis 10, bevorzugt mit 0 bis 4 C-Atomen,
- X =: wie im Falle der Formel I definiert,
- X' =: -OH, -NH₂, -SH, -CH=CH₂, -C(O)-O-C(O)-R^{~}, 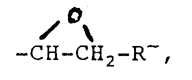 -NCO,
- R^{~} =: Alkyl mit 1 bis 10, bevorzugt mit 1 bis 4 C-Atomen,
- X" =: -O-C(O)-NH-, -NH-C(O)-NH-, -S-C(O)-NH-, -O-CH₂-CHOH-, -NH-CH₂-CHOH-, -S-CH₂-CHOH-, -O-C(O)-, -NH-C(O)-, -S-C(O)-, -C₂H₄-, -C₂H₄-S-, -C₂H₄-NH-, -NH-C(O)-O-, -NH-C(O)-S-, -CHOH-CH₂-O-, -CHOH-CH₂-NH-, -CHOH-CH₂-S-, -C(O)-O-, -C(O)-NH-, -C(O)-S-,
wobei die Reste Ar, R*, R- oder R⁺ auch Substituenten tragen können.

Bevorzugte Ausführungsformen der erfindungsgemäßen Aktivatoren sind 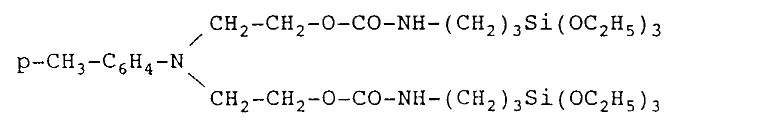 und/oder

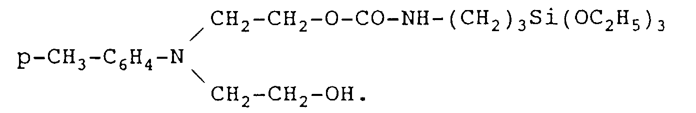

Überraschenderweise wurde festgestellt, daß Amine der allgemeinen Formel IX oder X ebenfalls als Aktivatoren eingesetzt werden können und zur Selbsthärtung der erfindungsgemäßen Systeme führen. Dies überrascht umso mehr, als z.B. das silangebundene Amin der Formel (C₂H₅)₂N(CH₂)₃Si(OC₂H₅)₃ nicht zur Selbsthärtung führt.

Der Einsatz von Aminen der Formel IX oder X bietet den grossen Vorteil, daß die Aminkomponente über den Silananteil während der Hydrolyse und der Kondensation in das anorganische Netzwerk eingebaut und dort fest verankert wird. Damit liegen nach der Härtung keine freien Amine vor und es treten diesbezüglich keine toxikologischen Probleme auf. Damit sind die erfindungsgemäßen Systeme unter Verwendung von Aminen der Formel IX als Aktivatoren insbesondere zum Einsatz im medizinischen Bereich geeignet.

Bei der Verwendung von Aktivatoren der Formel IX oder X besteht der große Vorteil der erfindungsgemäßen Systeme darin, daß sowohl die erfindungsgemäßen Aktivator-Silane als auch die reaktiven Monomere der Formel I nach der Härtung fest im anorganisch-organischen Netzwerk verankert, d.h. chemisch gebunden sind, also nicht mehr frei vorliegen und somit toxikologisch unbedenklich sind. Die Kombination von reaktiven Monomeren der Formel I mit den erfindungsgemäßen Aktivator-Silanen der Formel IX oder X bietet also gegenüber dem Stand der Technik ganz erhebliche toxikologische Vorteile.

Die Darstellung der erfindungsgemäßen Amine der Formel IX oder X erfolgt z.B. über Additionsreaktionen, wobei in Abhängigkeit der zugesetzten Menge des Silans (1 bis 2 Äquivalente) Amine der Formel IX oder X oder Mischungen derselben entstehen. Am Beispiel der Umsetzung von einem Äquivalent Amin mit zwei Äquivalenten Silan werden verschiedene Typen von Additionsreaktionen, die zu den erfindungsgemäßen Aktivator-Silanen führen, schematisch dargestellt.

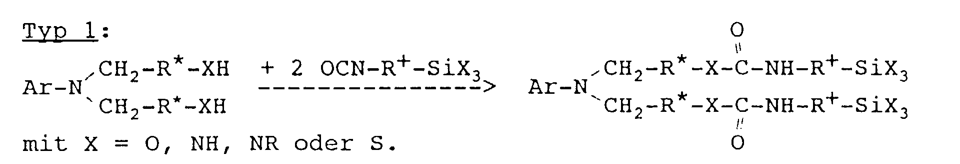

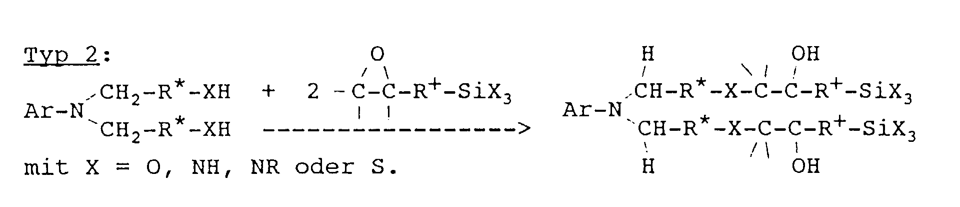

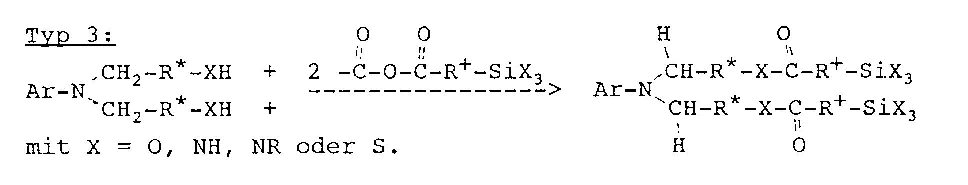

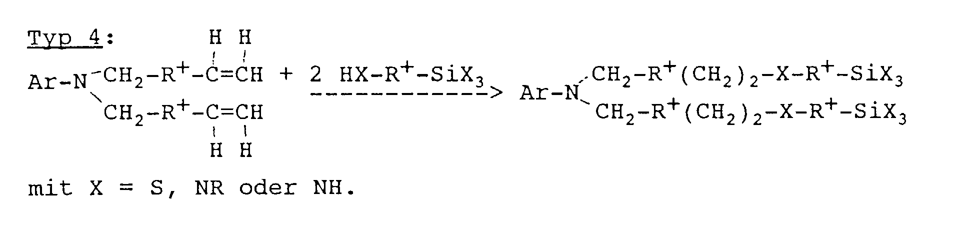

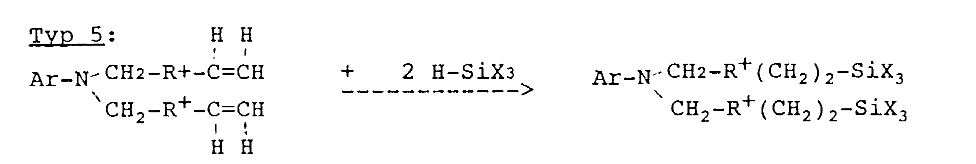

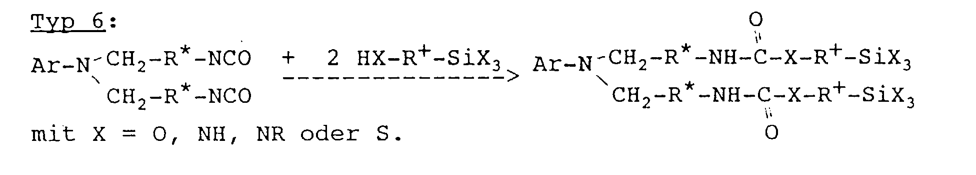

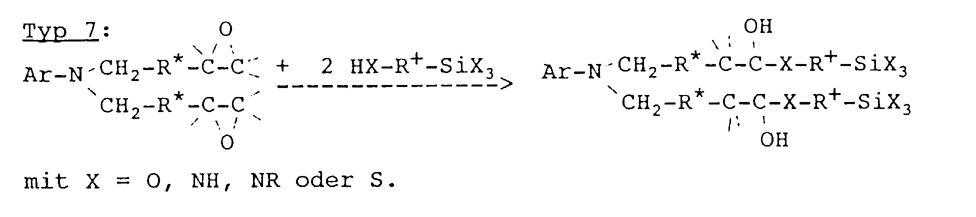

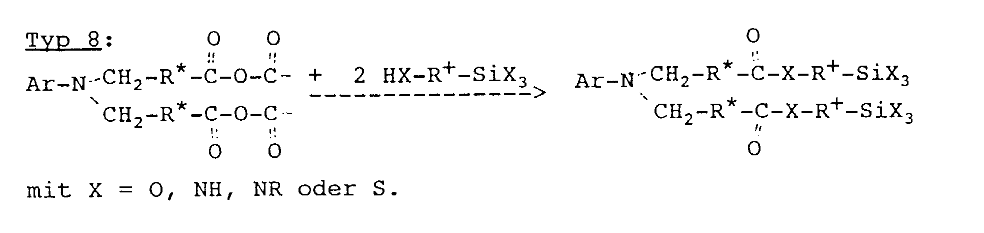

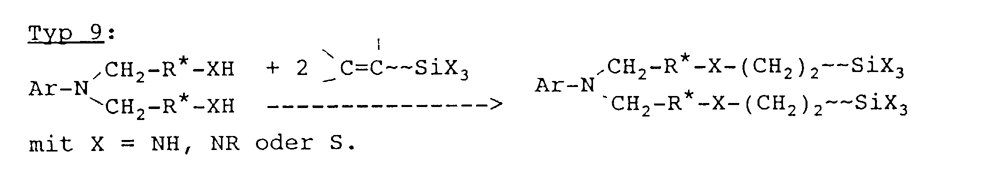

Es ist auch möglich, den erfindungsgemäßen Systemen vor der endgültigen Härtung, also vor der Polymerisation weitere ionisch und/oder radikalisch polymerisierbare Verbindungen zuzusetzen. Radikalisch polymerisierbare Monomere, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide. Es können aber auch Verbindungen zugesetzt werden, die sowohl kationisch als auch radikalisch polymerisierbar sind, wie z.B. Methacryloyl-Spiroorthoester, Vinylether oder Glycidylmethacrylat. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt neben der Selbsthärtung der erfindungsgemäßen Systeme auch eine photochemische Härtung, so werden mindestens einer Komponente des erfindungsgemäßen Systems übliche kationische Photoinitiatoren zugesetzt. Geeignete Photoinitiatoren nach dem Stand der Technik sind z.B. Verbindungen, die bei Bestrahlung Säuren freisetzen, wie etwa C₆H₅-N₂BF₄, o-NO₂-c₆H₄-CH₂-O-SO₂CF₃ oder Triarylsulfoniumsalze der allgemeinen Formeln VI, VII und VIII, in denen die Reste Ar gleich oder verschieden sind und Aryl bzw. Arylen, z.B. Phenyl und Phenylen, bedeuten, mit X⁻ = BF₄⁻, AsF₆⁻, PF₆⁻ oder SbF₆⁻.

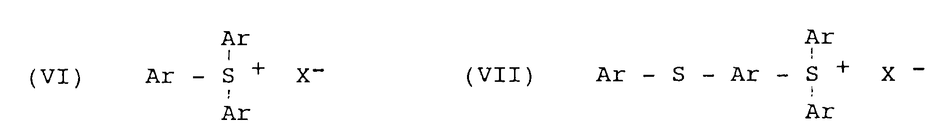

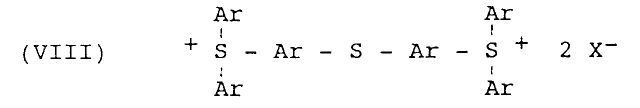

Diese Photoinotiatoren sind kommerziell erwerbbar. Z.B. von der Firma Union Carbide das Triphenylsulfoniumhexafluorophosphat als 50 %-ige Lösung in Propylencarbonat unter dem Handelsnamen UVI-6990, oder von der Firma Degussa KI-85 (Initiator gemäß Formel VIII mit Ar = Phenyl bzw. Phenylen und X⁻ = PF₆⁻ als 50 %-ige Lösung in Propylencarbonat). Prinzipiell sind alle Photoinitiatoren geeignet, die für die Polymerisation von Oxiran-haltigen Molekülen, wie z.B. cycloaliphatischen Epoxiden, eingesetzt werden.

Unter dem Einfluß der Bestrahlung wird das Triarylsulfonium-Salz einer Photolyse unterzogen und es entsteht eine Broenstedsäure, welche die Ringöffnung der Spiro-Gruppen katalysiert, wobei die Masse polymerisiert.

Erfolgt neben der Selbsthärtung auch eine thermische Härtung der erfindungsgemäßen Systeme, so werden mindestens einer Komponente des erfindungsgemäßen Systems thermische Initiatoren zugesetzt. Geeignete thermische Initiatoren sind z.B. BF₃ als BF₃·H₂NC₂H₅, ZnCl₂, TiCl₄ oder SnCl₂. Auch hier können alle die thermischen Initiatoren eingesetzt werden, die für die Polymerisation von Epoxidgruppen geeignet sind. Die Initiatoren werden in üblichen Mengen zugegeben.

Als Photoinitiatoren können z.B. die im Handel erhältlichen eingesetzt werden. Beispiel hierfür sind Irgacure 184 (1-Hydroxycyclohexylphenylketon), Irgacure 500 (1-Hydroxycyclohexylphenylketon/Benzophenon), und andere von der Firma Ciba-Geigy erhältliche Photoinitiatoren vom Irgacure-Typ; Darocure 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4.4 -Dimethoxybenzoin, Campherchinon, Phosphinoxid-Derivate und andere.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Das anorganische Netzwerk ist dafür verantwortlich, daß die gehärteten, erfindungsgemäßen Systeme bereits ganz ohne Zusatz von Füllstoffen über eine ausgezeichnete Abrasionsfestigkeit, Formstabilität und Festigkeit verfügen, und die Ausbildung des organischen Netzwerkes bewirkt eine geringe oder sogar negative Volumenschrumpfung. Bei Zusatz von Silanen der allgemeinen Formel III kann durch die Anzahl der Spiro-Gruppen in den erfindungsgemäßen Systemen, d.h. durch die Art und/oder durch die Menge der eingesetzten Spiro-Silane der allgemeinen Formel III, die Volumenänderung während der Härtung den Anforderungen des jeweiligen Anwendungsfalles angepaßt werden. Je höher die Anzahl der Spiro-Gruppen ist, desto geringer ist die Volumenschrumpfung. Ja es ist sogar möglich, die Volumenänderung bei der Härtung so zu beeinflussen, daß eine Volumenzunahme resultiert.

Die erfindungsgemäßen, selbsthärtenden Systeme können entweder als solche oder zusammen mit üblichen Zusatzstoffen, wie z.B. Füllstoffen (Filler), Haftvermittlern, Weichmachern, Schlagzähigkeitsverbesserern oder Flammschutzmitteln verarbeitet werden. Dabei werden die vorteilhaften Eigenschaften der gehärteten, erfindungsgemäßen Systeme durch Zusatz von Füllstoffen noch weiter verbessert, sodaß daraus Materialien resultieren, deren Eigenschaftsprofil gegenüber dem Stand der Technik ganz erheblich verbessert ist, und die allen Anforderungen, die an solche Materialien gestellt sind, gerecht werden können. Desweiteren können übliche Additive zugegeben werden wie z.B. Färbemittel ( Pigmente und Farbstoffe), Oxidationsinhibitoren, Verlaufsmittel, UV-Absorber, Stabilisatoren und der gleichen. Auch Zusätze zur Erhöhung der Leitfähigkeit (z.B. Graphit-Pulver, Silber-Pulver etc.) zur Herstellung von z.B. leitfähigen Verklebungen verdienen in diesem Zusammenhang Erwähnung. Im Falle der Verwendung als Formmasse kommt insbesondere die Zugabe von anorganischen und/oder organischen Füllstoffen in Frage, wie z.B. (Glas-)Fasern, Mineralien etc..

Desweiteren können als Füllstoffe z.B. Makrofiller (aus Glas, Keramik oder Quarz, Teilchengrößen zwischen 2 bis 50 µ m), homogene Mikrofiller (z.B. aus pyrogener Kieselsäure, Teilchengrößen ca. 0.04 µm), inhomogene Mikrofiller (ein Teil der pyrogenen Kieselsäure liegt als Splitterpolymerisat vor), Hybridfiller (Mischung von Makro- und Mikrofillern) oder Feinsthybridfiller (z.B. Mischung aus Aerosil und Ba- oder Sr-Glas mit Teilchengrößen von 2 µm) eingesetzt werden.

Dabei werden die mechanischen Eigenschaften der resultierenden, gehärteten Systeme durch die Korngröße und die Menge der Füllstoffe mitbeeinflußt. Ferner wird die Schrumpfung (je höher der Füllstoffgehalt bei gleicher Matrix, desto niedriger die Schrumpfung), die Röntgenopazität (durch Zusatz von z.B. Ba-, Sr-, Ti- oder Zr-Komponenten im Füllstoff) und der thermische Ausdehnungskoeffizient (abhängig vom Füllstoffgehalt; Füllstoffe weisen gewöhnlich einen niedrigeren Ausdehnungskoeffizienten auf als als die organische Matrix) durch den Zusatz von Füllstoffen weiter positiv beeinflußt.

Ferner ist es möglich, gehärtete erfindungsgemäße Systeme den erfindungsgemäßen, ungehärteten Systemen in feinteiliger Form als Füllstoff zuzusetzen. Dazu werden die erfindungsgemäßen Systeme polymerisiert, z.B. in Form einer Emulsions-, einer Fällungs-, einer Lösungs- oder einer Suspensionspolymerisation. Das Polymerisat wird getrocknet, gegebenenfalls fein vermahlen und den erfindungsgemäßen Systemen zugemischt.

Anhand von Ausführungsbeispielen werden die erfindungsgemässen Systeme näher erläutert.

### Beispiel 1:

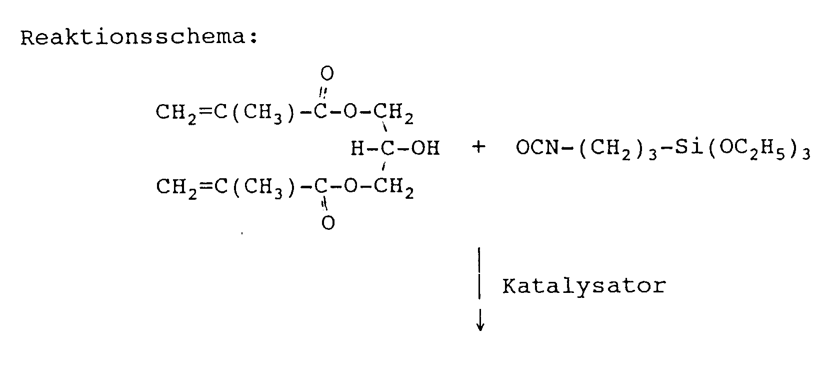

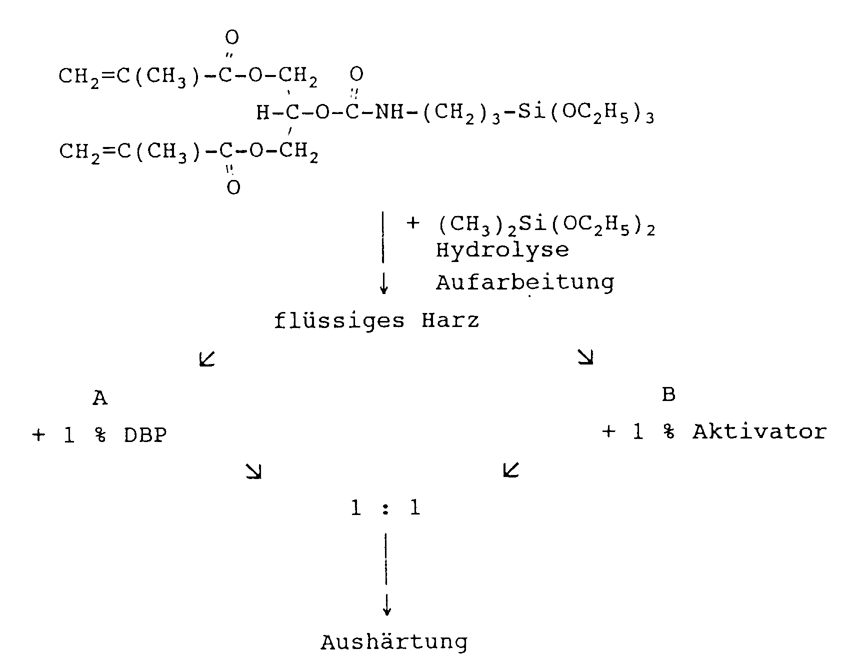

### Synthese:

Zur Vorlage von 11.4 g (0.05 mol) Glycerin-1,3-dimethacrylat und Dibutylzinndilaurat (als Additionskatalysator) werden bei Raumtemperatur unter trockener Luft 12.4 g (0.05 mol) 3-Isocyanatopropyltriethoxysilan zugetropft. Nach etwa 2-stündigem Rühren ist die Addition vollzogen (IR-Kontrolle) und es werden 7.4 g (0.05 mol) Dimethyldiethoxysilan zugesetzt. Zur Hydrolyse und Kondensation werden ca. 100 ml Essigester sowie 3.6 g Wasser (incl. Katalysator) zugesetzt. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare, nahezu farblose Harz wird in einer Ausbeute von ca. 95 % erhalten und kann so für die folgende Aushärtung eingesetzt werden.

### Präparation der Härterkomponenten:

In 5 g des obigen Harzes wird 1 % Dibenzoylperoxid (Starter) gelöst. Dies ergibt die Komponente A. In weiteren 5 g des obigen Harzes wird 1 % N,N-Bis-(2-hydroxyethyl)-p-toluidin (Aktivator) gelöst. Dies ergibt die Komponente B.

### Härtung:

**1. Beispiel:** Komponente A und B werden ineinander gelöst und in eine Härtungsform gegeben (φ = 2 cm; d = 2 mm). Nach ca. 1 - 2 Minuten wird die Probe hart, die Aushärtung ist nach etwa 5 min erfolgt.
**2. Beispiel:** Verklebungen werden wie folgt hergestellt. Die beiden Klebflächen werden mit Komponente A bzw. B oder einer Mischung von beiden eingestrichen und zusammengedrückt. Nach ca. 5 min liegt eine stabile Verklebung vor.

Die Härtungszeit und somit die Verarbeitungszeit läßt sich durch die jeweilige Starter- und Aktivatormenge sowie durch deren Verhältnis variieren bzw. steuern.

### Beispiel 2 :

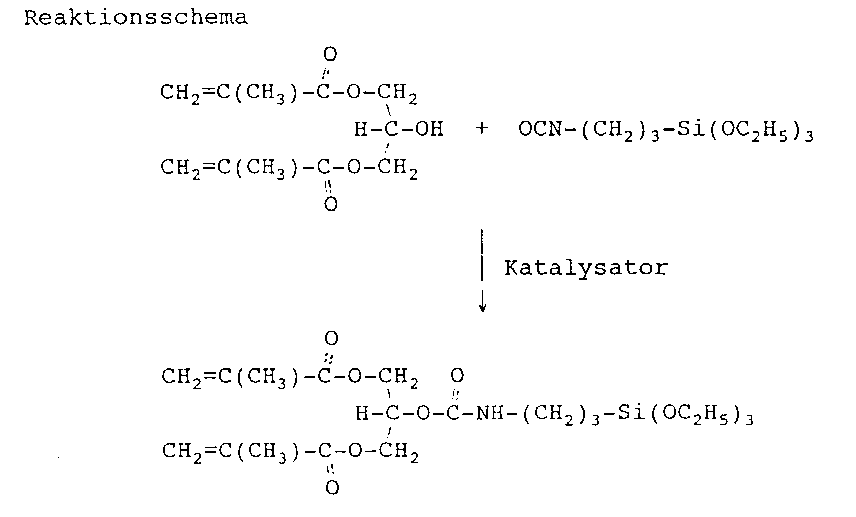

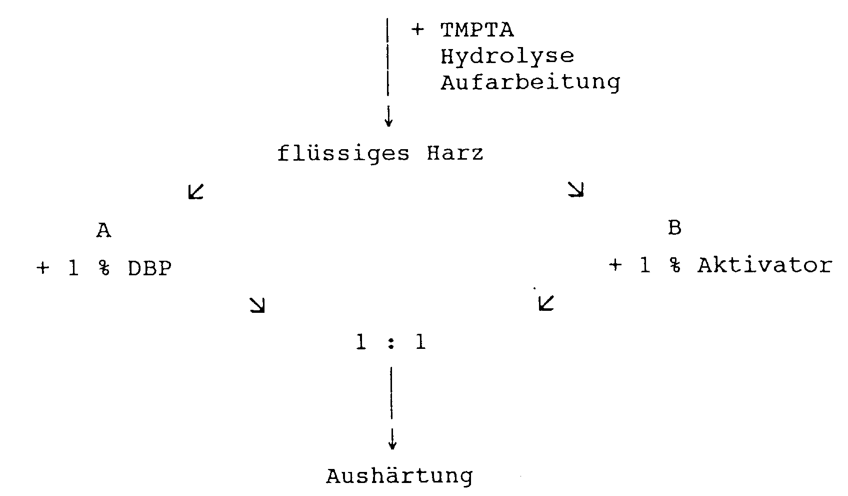

### Synthese:

Zur Vorlage von 114.1 g (0.5 mol) Glycerin-1,3-dimethacrylat und Dibutylzinndilaurat (als Additionskatalysator) werden bei Raumtemperatur unter trockener Luft 123.7 g (0.5 mol) 3-Isocyanatopropyltriethoxysilan zugetropft. Nach etwa 2-stündigem Rühren ist die Addition vollzogen (IR-Kontrolle). Zur Hydrolyse und Kondensation werden ca. 1000 ml Essigester sowie 21.6 g Wasser (incl. Katalysator) zugesetzt. Als Reaktivlösungsmittel werden 29.6 g (0.2 mol) Trimethylolpropyltriacrylat (TMPTA) zugesetzt. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare, nahezu farblose Harz wird in einer Ausbeute von ca. 94 % erhalten und kann so für die folgende Aushärtung eingesetzt werden.

### Präparation der Härterkomponenten:

In 5 g des obigen Harzes wird 1 % Dibenzoylperoxid (Starter) gelöst. Dies ergibt die Komponente A. In weiteren 5 g des obigen Harzes wird 1 % N,N-Bis-(2-hydroxyethyl)-p-toluidin (Aktivator) gelöst. Dies ergibt die Komponente B.

### Härtung:

**1. Beispiel**: Komponente A und B werden ineinander gelöst und in eine Härtungsform gegeben (φ = 2 cm; d = 2 mm). Nach ca. 1 - 2 Minuten wird die Probe hart, die Aushärtung ist nach etwa 4 min erfolgt.
**2. Beispiel**: Verklebungen werden wie folgt hergestellt. Die beiden Klebflächen werden mit Komponente A bzw. B oder einer Mischung von beiden eingestrichen und zusammengedrückt. Nach ca. 4 min liegt eine stabile Verklebung vor.

Die Härtungszeit und somit die Verarbeitungszeit läßt sich durch die jeweilige Starter- und Aktivatormenge sowie durch deren Verhältnis variieren bzw. steuern.

### Beispiel 3 :

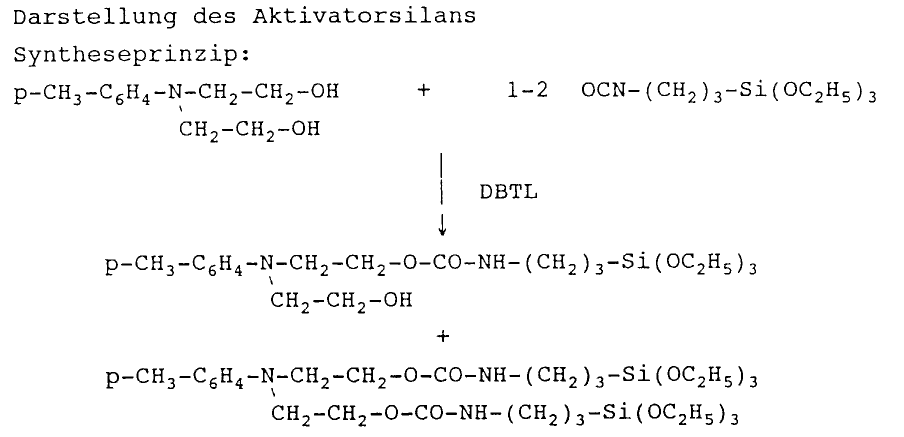

### Synthesevorschrift:

Zur Vorlage von 3.9 g (0.02 mol) N,N-Bis-(2-hydroxyethyl)-p-toluidin (Aktivator von Beispiel 2) und DBTL (Dibutylzinnlaurat) als Katalysator gelöst in Essigester, werden bei Raumtemperatur 7.4 g (0.03 mol) 3-Isocyanatopropyltriethoxysilan zugetropft. Nach 2-stündigem Rühren ist die Addition vollzogen (IR-Kontrolle). Zur Charakterisierung wird das Lösungsmittel abgezogen.
- IR-Daten :: ν(NH, Urethan) = 3380 cm⁻¹
ν(CH, aliph.) = 2980 - 2880 cm⁻¹
ν(CH, arom.) > 3000 cm⁻¹
ν(C=O, Urethan) = 1703 cm⁻¹

Das Aktivatorsilan kann in der puren Form oder auch direkt in Form der Syntheselösung eingesetzt werden.

### Beispiel 4 :

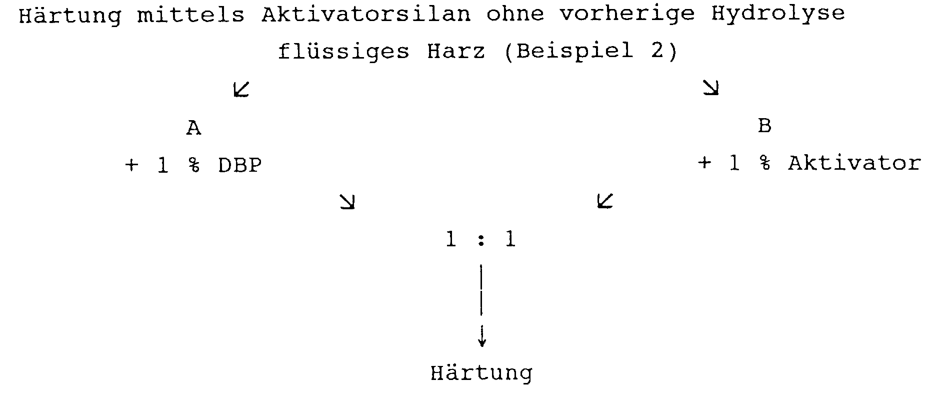

### Präparation der Härterkomponenten:

In 2 g obigen Harzes (s. Beispiel 2) wird 1 % Dibenzoylperoxid gelöst (⇒ Komponente A). Das Aktivatorsilan (1 %) wird ebenfalls in 2 g des Harzes gelöst (⇒ Komponente B).

### Härtung:

Komponente A und B werden ineinander gelöst und in eine Härtungsform gegeben (φ = 2 cm, d = 2 mm). Nach ca. 10 Minuten wird die Probe hart.

### Beispiel 5 :

Anorganisch einkondensiertes Aktivatorsilan

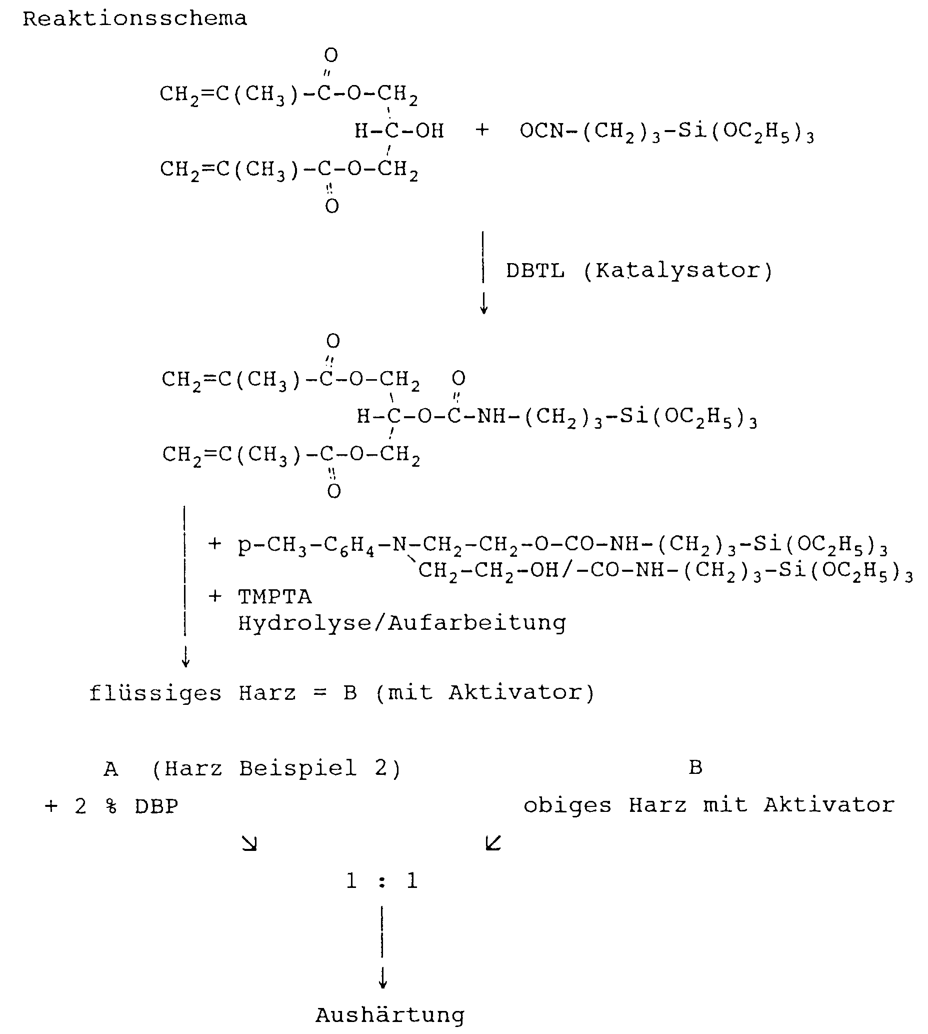

### Synthese:

Zur Vorlage von 45.6 g (0.2 mol) Glycerin-1,3-dimethylacrylat und Dibutylzinndilaurat (als Additionskatalysator) werden bei Raumtemperatur unter trockener Luft 49.5 g (0.2 mol) 3-Isocyanatopropyltriethoxysilan zugetropft. Nach etwa 2stündigem Rühren ist die Addition vollzogen (IR-Kontrolle) und es werden ca. 200 ml Essigester , 11.9 g (0.04 mol) TMPTA sowie 1.7 g (0.003 mol) Aktivatorsilan (gemäß Beispiel 3) zugesetzt. Zur Hydrolyse und Kondensation werden ca. 8.8 g Wasser (incl. Katalysator) zugesetzt. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare, nahezu farblose Harz wird in einer Ausbeute von ca. 95 % erhalten und kann so für die folgende Aushärtung eingesetzt werden.

Die Isocyanat-Addition an das Methacrylat sowie das Amin kann auch in einem Ansatzgemisch erfolgen.

### Präparation der Härterkomponenten:

In 6 g des Harzes von Beispiel 2 werden 2 % Dibenzoylperoxid gelöst (⇒ Komponente A). 6 g obigen Harzes mit dem Aktivatorsilan bildet Komponente B. Das Dibenzoylperoxid kann auch direkt, d.h. ohne Harzzusatz, als Komponente A fungieren.

### Härtung:

Komponente A und B werden ineinander gelöst und in eine Härtungsform gegeben(φ = 2 cm, d = 2mm). Nach ca. 3 - 4 Minuten wird die Probe hart. Die Härtungszeit und somit die Verarbeitungszeit läßt sich durch die jeweilige Starter- und Aktivatormenge sowie dessen Verhältnis variieren.

## Patentansprüche

1. Silane der allgemeinen Formel X, 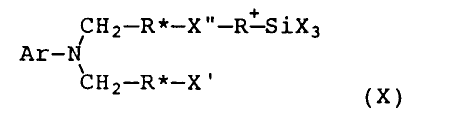 in der die Reste folgende Bedeutung haben:
Ar = Aryl, bevorzugt Phenyl, Naphthyl oder Biphenyl;
R* = Alkylen mit 1 bis 10, bevorzugt mit 1 bis 4 C-Atomen;
R⁺ = Alkylen mit 0 bis 10, bevorzugt mit 0 bis 4 C-Atomen;
R^{~} = Alkyl mit 1 bis 10, bevorzugt mit 1 bis 4 C-Atomen;
R^{"} = Wasserstoff, Alkyl oder Aryl;
X = Wasserstoff, Halogen, Hydroxy, Alkoxy, Acyloxy, Alkylcarbonyl, Alkoxycarbonyl oder NR"₂;
X' = -OH, -NH₂, -SH, -CH=CH₂, -C(O)-O-C(O)-R^{~}, 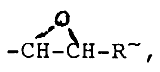 -NCO oder -X"-R⁺-SiX₃;
X" = -O-C(O)-NH-, -NH-C(O)-NH-, -S-C(O)-NH-, -O-CH₂-CHOH-, -NH-CH₂-CHOH-, -S-CH₂-CHOH-, -O-C(O)-, -NH-C(O)-, -S-C(O)-, -C₂H₄-, -C₂H₄-S-, -C₂H₄-NH-, -NH-C(O)-O-, -NH-C(O)-S-, -CHOH-CH₂-O-, -CHOH-CH₂-NH-, -CHOH-CH₂-S-, -C(O)-O-, -C(O)-NH- oder -C(O)-S-;
wobei die Reste Ar, R*, R^{~} oder R⁺ auch Substituenten tragen können.

2. Verfahren zur Herstellung der Silane nach Anspruch 1, dadurch gekennzeichnet, daß man an ein Amin der allgemeinen Formel Ar-N(CH₂-R*-X^{•}H)₂ (mit X^{•} = O, NH, NR oder S) nach üblichen Methoden ein oder zwei Äquivalente eines Silans der allgemeinen Formel OCN-R⁺-SiX₃ addiert, wobei die Reste Ar, R*, R⁺ und X wie in Anspruch 1 definiert sind.

3. Verfahren zur Herstellung der Silane nach Anspruch 1, dadurch gekennzeichnet, daß man an ein Amin der allgemeinen Formel Ar-N(CH₂-R*-X^{•}H)₂ (mit X^{•} = O, NH, NR oder S) nach üblichen Methoden ein oder zwei Äquivalente eines Silans mit dem Strukturelement 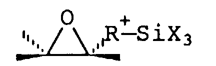 addiert, wobei die Reste Ar, R*, R⁺ und X wie in Anspruch 1 definiert sind.

4. Verfahren zur Herstellung der Silane nach Anspruch 1, dadurch gekennzeichnet, daß man an ein Amin der allgemeinen Formel Ar-N(CH₂-R*-X^{•}H)₂ (mit X^{•} = O, NH, NR oder S) nach üblichen Methoden ein oder zwei Äquivalente eines Silans mit dem Strukturelement -C(O)-O-C(O)-R⁺-SiX₃, unter Eliminierung einer Carbonsäure, addiert, wobei die Reste Ar, R*, R⁺ und X wie in Anspruch 1 definiert sind.

5. Verfahren zur Herstellung der Silane nach Anspruch 1, dadurch gekennzeichnet, daß man an ein Amin der allgemeinen Formel Ar-N(CH₂-R⁺-CH=CH₂)₂ nach üblichen Methoden ein oder zwei Äquivalente eines Silans der allgemeinen Formel HX^{•}-R⁺-SiX₃ (mit X^{•} = NH, NR oder S) addiert, wobei die Reste Ar, R⁺ und X wie in Anspruch 1 definiert sind.

6. Verfahren zur Herstellung der Silane nach Anspruch 1, dadurch gekennzeichnet, daß man an ein Amin der allgemeinen Formel Ar-N(CH₂-R⁺-CH=CH₂)₂ nach üblichen Methoden ein oder zwei Äquivalente eines Silans der allgemeinen Formel H-SiX₃ addiert, wobei die Reste Ar, R⁺ und X wie in Anspruch 1 definiert sind.

7. Verfahren zur Herstellung der Silane nach Anspruch 1, dadurch gekennzeichnet, daß man an ein Amin der allgemeinen Formel Ar-N(CH₂-R*-NCO)₂ nach üblichen Methoden ein oder zwei Äquivalente eines Silans der allgemeinen Formel HX^{•}-R⁺-SiX₃ (mit X^{•} = O, NH, NR oder S) addiert, wobei die Reste Ar, R*, R⁺ und X wie in Anspruch 1 definiert sind.

8. Verfahren zur Herstellung der Silane nach Anspruch 1, dadurch gekennzeichnet, daß man an ein Amin mit dem Strukturelement 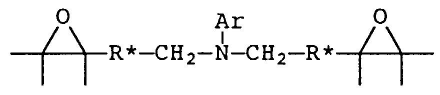 nach üblichen Methoden ein oder zwei Äquivalente eines Silans der allgemeinen Formel HX^{•}-R⁺-SiX₃ (mit X^{•} = O, NH, NR oder S) addiert, wobei die Reste Ar, R*, R⁺ und X wie in Anspruch 1 definiert sind.

9. Verfahren zur Herstellung der Silane nach Anspruch 1, dadurch gekennzeichnet, daß man an ein Amin mit dem Strukturelement Ar-N(CH₂-R*-C(O)-O-C(O)-)₂ nach üblichen Methoden ein oder zwei Äquivalente eines Silans der allgemeinen Formel HX^{•}-R⁺-SiX₃ (mit X^{•} = O, NH, NR oder S) addiert, wobei die Reste Ar, R*, R⁺ und X wie in Anspruch 1 definiert sind.

10. Verwendung der Silane nach Anspruch 1 als Aktivatoren in selbsthärtenden Systemen.

11. Verwendung nach Anspruch 10 in selbsthärtendes System auf der Basis polymerisierbarer und hydrolytisch kondensierbarer und/oder hydrolytisch kondensierter Silicium-Verbindungen, bestehend aus einer oder mehreren Komponenten, die Starter und/oder Aktivator-Systeme enthalten, sowie gegebenenfalls übliche Additive und/oder Füllstoffe und gegebenenfalls weitere copolymerisierbare Monomere und/oder Oligomere und/oder weitere hydrolytisch kondensierbare und/oder kondensierte Verbindungen des Siliciums und gegebenenfalls anderer Elemente aus der Gruppe Al, Ti, Zr, B, P, Sn, Pb, der Übergangsmetalle, der Lanthaniden und der Actiniden, wobei mindestens eine Komponente des Systems eine oder mehrere Silicium-Verbindungen der Formel I und/oder von diesen abgeleitete (Vor) Kondensate enthält,
{XₐR_{b}Si[(R'A)_{c}]_{(4-a-b)}}ₓB (I)
in der die Reste und Indices gleich oder verschieden sind und folgende Bedeutung haben:
A = O, S, PR", POR", NHC(O)O oder NHC(O)NR",
B = geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoff-Atomen ableitet,
R = Alkyl, Alkenyl, Aryl, Alkylaryl oder Arylalkyl,
R'= Alkylen, Arylen oder Alkylenarylen,
R"= Wasserstoff, Alkyl oder Aryl,
X = Wasserstoff, Halogen, Hydroxy, Alkoxy, Acyloxy, Alkylcarbonyl, Alkoxycarbonyl oder NR"₂,
a = 1, 2 oder 3,
b = 0, 1 oder 2,
c = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht;
wobei die obigen Alkyl- bzw. Alkenyl-Reste gegebenenfalls substituierte geradkettige, verzweigte oder cyclische Reste mit 1 bzw. 2 bis 20 Kohlenstoff-Atomen sind, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkyl- und Aryl-Resten ableiten.

12. Verwendung nach Anspruch 10 in selbsthärtenden Systemen, in denen eine oder mehrere Komponenten thermisch und/oder strahlungsinduziert copolymerisierbare Monomere und/oder Oligomere und/oder Polymere enthalten.

13. Verwendung nach Anspruch 10 in selbsthärtenden Systemen, in denen eine oder mehrere Komponenten selbsthärtend copolymerisierbare Monomere und/oder Oligomere und/oder Polymere enthalten.

## Claims

1. Silanes of the general formula X, 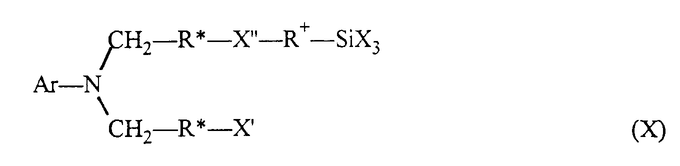 wherein the residues have the following meanings:
Ar = aryl, preferably phenyl, naphthyl or biphenyl;
R* = alkylene with 1 to 10, preferably 1 to 4 C atoms
R⁺ = alkylene with 0 to 10, preferably 0 to 4 C atoms
R⁻ = alkyl with 1 to 10, preferably 1 to 4 C atoms
R" = hydrogen, alkyl or aryl
X = hydrogen, halogen, hydroxy, alkoxy, acyloxy, alkylcarbonyl, alkoxycarbonyl or NR"₂;
X'= ―OH, ―NH₂, ―SH, ―CH=CH₂, ―C(O)―O―C(O)―R^{―}, 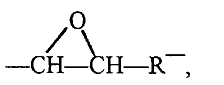 ―NCO or ―X"―R⁺―SiX₃ ;
X" = ―O―C(O)―NH―, ―NH―C(O)―NH―, ―S―C(O)―NH―, ―O―CH₂―CHOH―, ―NH―CH₂―CHOH―, ―S―CH₂―CHOH―, ―O―C(O)―, ―NH―C(O)―, ―S―C(O)―, ―C₂H₄―, ―C₂H₄―S―, ―C₂H₄―NH―, ―NH―C(O)―O―, ―NH―C(O)―S―, ―CHOH―CH₂―O―, ―CHOH―CH₂―NH―, ―CHOH―CH₂―S―, ―C(O)―O―, ―C(O)―NH― or ―C(O)―S―;
wherein the residues Ar, R*, R⁻ or R⁺ can also carry substituents.

2. A method of making the silanes according to claim 1, characterized in that to an amine of the general formula Ar―N(CH₂―R*―X°H)₂ (with X° = O, NH, NR or S) are added according to usual methods one or two equivalents of silane of the general formula OCN―R⁺―SiX_{3,} wherein the residues Ar, R*, R⁺ and X are defined as in claim 1.

3. A method of making the silanes according to claim 1, characterized in that to an amine of the general formula Ar―N(CH₂―R*―X°H)₂ (with X° = O, NH, NR or S) are added according to usual methods one or two equivalents of a silane with the structure element 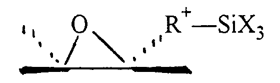 wherein the residues Ar, R*, R⁺ and X are defined as in claim 1.

4. A method of making the silanes according to claim 1, characterized in that to an amine of the general formula Ar―N(CH₂―R*―X°H)₂ (with X° = O, NH, NR or S) are added according to usual methods one or two equivalents of a silane with the structure element―C(O)―O―C(O)―R⁺―SiX₃, with elimination of a carboxylic acid, wherein the residues Ar, R*, R⁺ and X are defined as in claim 1.

5. A method of making the silanes according to claim 1, characterized in that to an amine of the general formula Ar―N(CH₂―R⁺―CH=CH₂)₂ are added according to usual methods one or two equivalents of a silane of the general formula HX°―R⁺―SiX₃ (with X° = NH, NR or S), wherein the residues Ar, R⁺ and X are defined as in claim 1.

6. A method of making the silanes according to claim 1, characterized in that to an amine of the general formula Ar―N(CH₂―R⁺―CH=CH₂)₂ are added according to usual methods one or two equivalents of a silane of the general formula H―SiX₃, wherein the residues Ar, R⁺ and X are defined as in claim 1.

7. A method of making the silanes according to claim 1, characterized in that to an amine of the general formula Ar―N(CH₂―R*―NCO), are added according to usual methods one or two equivalents of silane of the general formula HX°―R⁺―SiX₃ (with X° = O, NH, NR or S), wherein the residues Ar, R*, R⁺ and X are defined as in claim 1.

8. A method of making the silanes according to claim 1, characterized in that to an amine with the structure element 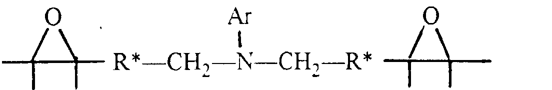 are added according to usual methods one or two equivalents of a silane of the general formula HX°―R⁺―SiX₃ (with X° = O, NH, NR or S), wherein the residues Ar, R*, R⁺ and X are defined as in claim 1.

9. A method of making the silanes according to claim 1, characterized in that to an amine with the structure element Ar―N(CH₂―R*―C(O)―O―C(O)―)₂ are added according to usual methods one or two equivalents of a silane of the general formula HX°―R⁺―SiX₃ (with X° = O, NH, NR or S), wherein the residues Ar, R*, R⁺ and X are defined as in claim 1.

10. Use of the silanes according to claim 1 as activators in self-curing systems.

11. Use according to claim 10 in a self-curing system based on silicon compounds which can be polymerised and hydrolytically condensed and/or are hydrolytically condensed, consisting of one or more components which contain starter and/or activator systems, as well as optionally customary additives and/or fillers and optionally further co-polymerisable monomers and/or oligomers and/or further compounds of silicon which can be and/or are hydrolytically condensed and optionally other elements from the group Al, Ti, Zr, B, P, Sn, Pb, the transition metals, the lanthanides and the actinides, wherein at least one component of the system contains one or more silicon compounds of formula I and/or (pre-)condensates derived therefrom,
{XₐR_{b}Si[(R'A)_{c}]_{(4-a-b)}}ₓB (I)
in which the residues and indices are the same or different and have the following significance:
A = O, S, PR", POR", NHC(O)O or NHC(O)NR",
B = straight chain or branched organic residue, which is derived from a compound B' with at least one C=C double bond (for c = 1 and A = NHC(O)O or NHC(O)NR") or at least two C=C double bonds and 5 to 50 carbon atoms,
R = alkyl, alkenyl, aryl, alkylaryl or arylalkyl,
R' = alkylene, arylene or alkylenearylene,
R"= hydrogen, alkyl or aryl,
X = hydrogen, halogen, hydroxy, alkoxy, acyloyl, alkylcarbonyl, alkoxycarbonyl or NR"₂,
a = 1, 2 or 3,
b = 0, 1 or 2,
c = 0 or 1,
x = a whole number whose maximum value corresponds to the number of double bonds in the compound B' minus 1, or is equal to the number of double bonds in the compound B' when c = 1 and A stands for NHC(O)O or NHC(O)NR";
wherein the above alkyl or alkenyl residues are optionally substituted straight chain, branched or cyclic residues with 1 or 2 to 20 carbon atoms, aryl stands for optionally substituted phenyl, naphthyl or biphenyl and the above alkoxy, acyloxy, alkylcarbonyl, alkoxycarbonyl, alkylaryl, arylalkyl, arylene, alkylene and alkylenearyl residues derive from the alkyl and aryl residues defined above.

12. Use according to claim 10 in self-curing systems in which one or more components contain monomers and/or oligomers and/or polymers which are co-polymerisable thermally and/or radiation induced.

13. Use according to claim 10 in self-curing systems in which one or more components contain self-curing, co-polymerisable monomers and/or oligomers and/or polymers.

## Revendications

1. Silanes de formule générale X, 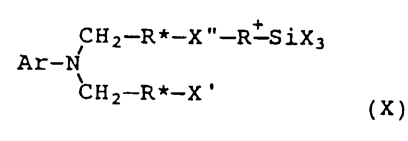 dans laquelle les radicaux ont la signification suivante :
Ar = aryle, de préférence phényle, naphtyle ou biphényle,
R* = alkylène avec C₁ à C₁₀, de préférence avec C₁ à C₄ atomes de carbone,
R⁺ = alkylène avec C₀ à C₁₀, de préférence avec C₀ à C₄ atomes de carbone,
R^{~} = alkyle avec C₁ à C₁₀, de préférence avec C₁ à C₄ atomes de carbone,
R" = hydrogène, alkyle ou aryle ;
X = hydrogène, halogène, hydroxy, alcoxy, acyloxy, alkylcarbonyle, alcoxycarbonyle ou NR"₂ ;
X' = -OH, -NH₂, -SH, -CH=CH₂, -C(O)-O-C(O)-R⁻, 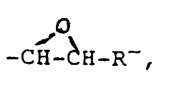 -NCO OU -X"-R⁺-SiX₃;
X" = -O-C(O)-NH-, -NH-C(O)-NH-, -S-C(O)-NH-, -O-CH₂-CHOH-, -NH-CH₂-CHOH-, -S-CH₂-CHOH-, -O-C(O)-, -NH-C(O)-, -S-C(O)-, -C₂H₄-, -C₂H₄-S-, -C₂H₄-NH-, -NH-C(O)-O-, -NH-C(O)-S-, -CHOH-CH₂-O-, -CHOH-CH₂-NH-, -CHOH-CH₂-S-, -C(O)-O-, -C(O)-NH- ou -C(O)-S-;
où les radicaux Ar, R*, R^{~} ou R⁺ peuvent également porter des substituants.

2. Procédé de fabrication des silanes selon la revendications 1,
caractérisé en ce qu'
on ajoute à une amine de formule générale Ar-N(CH₂-R*-X^{•}H)₂ (avec X^{•} = O, NH, NR ou S) selon des procédés habituels un ou deux équivalents d'un silane de formule générale OCN-R⁺-SiX₃, les radicaux Ar, R*, R⁺ et X étant tels que définis dans la revendication 1.

3. Procédé de fabrication des silanes selon la revendication 1,
caractérisé en ce qu'
on ajoute à une amine de formule générale Ar-N(CH₂-R*-X^{•} H)₂ (avec X^{•} = O, NH, NR ou S) selon des procédés habituels un ou deux équivalents d'un silane avec l'élément de structure 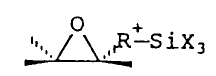 les radicaux Ar, R*, R⁺ et X étant tels que définis dans la revendication 1.

4. Procédé de fabrication des silanes selon la revendication 1,
caractérisé en ce qu'
on ajoute à une amine de formule générale Ar-N(CH₂-R*-X^{•} H)₂ (avec X^{•} = O, NH, NR ou S) selon des procédés habituels un ou deux équivalents d'un silane avec l'élément de structure [-C(O)-O-C(O)-R⁺-SiX₃], avec élimination d'un acide carboxylique, les radicaux Ar, R*, R⁺ et X étant tels que définis dans la revendication 1.

5. Procédé de fabrication des silanes selon la revendication 1,
caractérisé en ce qu'
on ajoute à une amine de formule générale Ar-N(CH₂-R⁺-CH=CH₂)₂ selon des procédés habituels un ou deux équivalents d'un silane de formule générale HX^{•}-R⁺-SiX₃, (avec X^{•} = NH, NR ou S), les radicaux Ar, R⁺ et X étant tels que définis dans la revendication 1.

6. Procédé de fabrication des silanes selon la revendication 1,
caractérisé en ce qu'
on ajoute à une amine de formule générale Ar-N(CH₂-R⁺-CH=CH₂)₂ selon des procédés habituels un ou deux équivalents d'un silane de formule générale H-SiX₃, les radicaux Ar, R ⁺ et X étant tels que définis dans la revendication 1.

7. Procédé de fabrication des silanes selon la revendication 1,
caractérisé en ce qu'
on ajoute à une amine de formule générale Ar-N(CH₂-R*-NCO)₂ selon des procédés habituels un ou deux équivalents d'un silane de formule générale HX^{•} -R⁺-SiX₃, (avec X^{•} = O, NH, NR ou S), les radicaux Ar, R*, R⁺ et X étant tels que définis dans la revendication 1.

8. Procédé de fabrication des silanes selon la revendication 1,
caractérisé en ce qu'
on ajoute à une amine ayant l'élément de structure 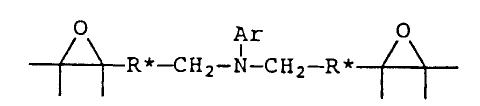 selon des procédés habituels un ou deux équivalents d'un silane de formule générale
HX^{•}-R -SiX₃ (avec X^{•} = O, NH, NR ou S),
les radicaux Ar, R*, R⁺ et X étant tels que définis dans la revendication 1.

9. Procédé de fabrication des silanes selon la revendica tion 1,
caractérisé en ce qu'
on ajoute à une amine ayant l'élément de structure Ar-N(CH₂-R*-C(O)-O-C(O)-)₂ selon des procédés habituels un ou deux équivalents d'un silane de formule générale HX^{•}-R⁺-SiX₃ (avec X^{•} = O, NH, NR ou S), les radicaux Ar, R*, R ⁺ et X étant tels que définis dans la revendication 1.

10. Utilisation des silanes selon la revendication 1, comme activateurs dans des systèmes auto-durcissants.

11. Uitlisation selon la revendication 10, dans des systèmes auto-durcissants à base de composés de silicium polymérisables et hydrolytiquement condensables et/ou hydrolytiquement condensés, constitués d'un ou plusieurs composants qui contiennent des initiateurs et/ou des systèmes activateurs, ainsi que le cas échéant des additifs et/ou charges habituelles, et le cas échéant d'autres monomères et/ou oligomères polymérisables, et/ou d'autres composés du silicium condensables et/ou condensés par hydrolyse, et le cas échéant d'autres éléments du groupe Al, Ti, Zr, B, P, Sn, Pb, les métaux de transition, les lanthanides et les actinides, au moins un composant du système contenant un ou plusieurs composés de silicium de formule I et/ou (pré)condensats qui en dérivent,
{XₐR_{b}Si[R' (A)_{c}] _{(4-a-b)}}ₓB (I)
où les radicaux et les indices sont identiques ou différents et ont la signification suivante :
A = O, S, PR", POR", NHC(O)O ou NHC(O)OR",
B = radical organique à chaîne droite ou ramifiée qui dérive d'un composé B' ayant au moins une (pour c = 1 et A = NHC(O)O ou NHC(O)NR") ou selon les cas au moins deux doubles liaisons C=C- et de 5 à 50 atomes de carbone,
R = alkyle, alcényle, aryle, alkylaryle ou arylalkyle,
R'= alkylène, arylène ou alkylène-arylène,
R"= hydrogène, alkyle ou aryle,
X = hydrogène, halogène, hydroxy, alcoxy, acyloxy, alkylcarbonyle, alcoxycarbonyle ou NR"₂,
a = 1, 2 ou 3,
b = 0, 1 ou 2,
c = 0 ou 1,
x = un nombre entier dont la valeur maximale correspond au nombre de doubles liaisons dans le composé B' moins 1, ou selon les cas est égal au nombre de doubles liaisons dans le composé B' lorsque c = 1, et A représente NHC(O)O ou NHC(O)NR",
où les radicaux alkyle ou selon les cas alcényle ci-dessus sont le cas échéant des radicaux à chaîne droite, ramifiée ou cyclique substitués comportant 1 ou selon les cas de 2 à 20 atomes de carbone, aryle représente un phényle, natphyle ou biphényle éventuellement substitué et les radicaux alcoxy, acyloxy, alkylcarbonyle, alcoxycarbonyle, alkylaryle, arylalkyle, arylène, alkylène et alkylènearyle ci-dessus dérivent des radicaux alkyle et aryle définis ci-dessus.

12. Utilisation selon la revendication 10, dans des systèmes auto-durcissants dans lesquels un ou plusieurs composants contiennent des monomères, et/ou oligomères et/ou polymères copolymérisables par voie thermique et/ou d'une manière induite par les rayonnements.

13. Utilisation selon la revendication 10, dans des systèmes auto-durcissants dans lesquels un ou plusieurs composants contiennent des monomères et/ou oligomères et/ou polymères copolymérisables de façon autodurcissante.
